Europäisches Patentamt

European Patent Office

Office européen des brevets

(11) Numéro de publication: **0 264 337 B1**

(12) **FASCICULE DE BREVET EUROPEEN**

(45) Date de publication de fascicule du brevet:
31.07.91

(51) Int. Cl.⁵: **C04B 35/52, B30B 11/00**

(21) Numéro de dépôt: **87420258.3**

(22) Date de dépôt: **28.09.87**

(54) **Procédé et dispositif de mise en forme de blocs carbonés par compactage multiaxial.**

(30) Priorité: **30.09.86 FR 8613779**

(43) Date de publication de la demande:
**20.04.88 Bulletin 88/16**

(45) Mention de la délivrance du brevet:
**31.07.91 Bulletin 91/31**

(84) Etats contractants désignés:
**AT CH DE ES GB GR IT LI NL SE**

(56) Documents cités:
**DE-A- 2 350 286**
**FR-A- 670 939**

(73) Titulaire: **ALUMINIUM PECHINEY**
**23, rue Balzac**
**F-75008 Paris Cédex 08(FR)**

(72) Inventeur: **Biarez, Jean**
**30, rue Fessart**
**F-92100 Boulogne(FR)**
Inventeur: **Vanvoren Claude**
**L'Echaillon - Hermillon**
**F-73300 St Jean De Maurienne(FR)**
Inventeur: **Coste Benoît**
**Le Clos Minoret rue Bonrieux**
**F-73300 St Jean De Maurienne(FR)**
Inventeur: **Keime François**
**18, chemin du Boutet**
**F-38540 Meylan(FR)**

(74) Mandataire: **Pascaud, Claude et al**
**PECHINEY 28, rue de Bonnel**
**F-69433 Lyon Cédex 3(FR)**

## Description

### DOMAINE TECHNIQUE DE L'INVENTION

La présente invention concerne un procédé et un dispositif de mise en forme par compactage multiaxial de blocs carbonés et notamment, mais non exclusivement, des anodes destinées à la production d'aluminium par électrolyse selon le procédé Hall-Héroult.

### ETAT DE L'ART ANTERIEUR

A l'heure actuelle, les blocs carbonés tels que les anodes utilisées pour la production d'aluminium sont obtenues par pilonnage, par pressage, par vibro-tassage ou par vibro-pressage d'une pâte carbonée constituée d'un agrégat de coke (et/ou d'anthracite) broyé, et de brai.

Ces quatre techniques relèvent du même principe : la pâte carbonée est introduite à une température de l'ordre de 120 à 140°C dans un moule indéformable (dit "oedométrique") et on lui applique une contrainte ou une succession de contraintes sensiblement verticales.

L'application de la contrainte, dite "chargement", peut être unique: c'est le cas du pressage en général, ou multiple : deux ou trois pressages successifs dans certains cas, et jusqu'à plusieurs centaines de fois dans le cas de vibro-tassage.

Les niveaux de contrainte mis en jeu dans les différents cas sont sensiblement différents : par exemple 28 MPa pour une presse à cycle unique 2 x 18 MPa pour une presse à cycle double, 0,5 à 2,5 MPa dans le cas d'une vibro-tasseuse. Mais, dans tous les cas, le niveau de compactage est limité soit par la teneur en brai, quand on arrive à la saturation en brai de l'espace intergranulaire de l'agrégat de coke, soit, dans le cas d'une teneur en brai inférieure à la saturation, par le fait que les grains de coke entrent en contact les uns avec les autres et ne peuvent plus se rapprocher davantage. Il existe donc en compactage uniaxial, c'est-à-dire avec une contrainte appliquée selon une direction unique, une limite physique qui ne permet pas d'aller au-delà d'une certaine densité apparente du matériau compacté.

C'est la raison pour laquelle des procédés et dispositifs de compactage des matériaux plastiques suivant plusieurs directions ont été expérimentés afin d'assurer une densification plus homogène et en définitive plus efficace de ces matériaux.

Ainsi, le document DE-A-2 350 286 décrit pour la fabrication de pièces moulées denses à partir de produits plastiques un procédé, avec son dispositif de vibration pour le mettre en oeuvre, selon lequel on applique sur le matériau simultanément et de façon répétitive, par l'intermédiaire de parois mobiles d'un moule mises en vibration, des contraintes selon des axes différents. Dans ce procédé, les parois du moule orientées dans des plans différents et animées d'un mouvement vibratoire sont mises en oeuvre simultanément et se rapprochent progressivement lors de la densification du matériau plastique, mais sans réversibilité de sorte que le matériau ne subit pas de pétrissage par déformation de la pâte dans différentes directions.

### OBJET DE L'INVENTION

L'invention concerne un procédé et un dispositif de compactage multi-axial consistant à appliquer successivement au matériau à compacter des contraintes selon différentes directions tout en permettant une déformation limitée du matériau plastique ou pâte dans ces différentes directions de manière à réaliser un pétrissage et donc un arrangement progressif des grains d'agrégat dans la pâte. Cela a pour résultat d'assurer le remplissage maximal de l'espace permis par la forme des grains d'agrégat et par la teneur en liant.

De façon plus précise, un premier objet de l'invention est un procédé de mise en forme par compactage dans un moule de blocs constitués d'une pâte carbonée à base d'un agrégat carboné tel que coke, anthracite, graphite, d'un liant organique cokéfiable tel que le brai et d'additifs éventuels, comportant l'application répétitive sur ladite pâte par les parois mobiles du moule de contraintes orientées dans diverses directions caractérisé en ce que ces contraintes sont exercées successivement et de telle sorte que, pendant l'application d'une contrainte $\sigma n$ selon un axe An, on contrôle et on limite l'écartement des parois mobiles par des moyens élastiques qui, après suppression au moins partielle de cette contrainte $\sigma n$, exercent a leur tour une contrainte $\sigma n + 1$ de réaction selon un axe An + 1 qui tend à ramener les parois mobiles vers leur position d'origine.

Selon un premier mode particulier de mise en oeuvre de l'invention, les contraintes sont exercées selon deux axes An et An + 1 perpendiculaires entre eux.

Selon un second mode particulier de mise en oeuvre de l'invention, les axes An, An + 1 et An + 2 forment un trièdre trirectangle.

Un autre objet de l'invention est un dispositif pour la mise en oeuvre du procédé de compactage multiaxial de blocs carbonés comportant un moule dont les parois mobiles (3) orientées selon des axes différents sont soumises de façon répétitive à des contraintes caractérisé en ce que ledit moule est constitué par un fond indéformable et par au moins 2 parois mobiles munies de moyens élastiques qui contrôlent et limitent l'écartement des parois mobiles pendant l'application d'une contrainte au bloc à compacter en exerçant à leur tour une contrainte de réaction qui tend à ramener ces parois mobiles vers leur position initiale quand la contrainte précédente est réduite ou supprimée.

Les figures 1 à 3 schématisent la mise en oeuvre de l'invention.

La figure 1 schématise le mouvement de rapprochement des grains d'agrégat, dispersés dans un liant sous l'action d'une première contrainte (verticale par exemple) σ1 puis, d'une seconde contrainte σ2, par exemple horizontale (perpendiculaire à σ1).

La figure 2 schématise un compactage biaxial selon l'invention.

Pour la bonne compréhension, la dimension des grains de coke a été très fortement exagérée.

La figure 3 schématise les phases d'un compactage biaxial à amplitude variable, selon l'invention. L'amplitude du déplacement des parois latérales a également été exagérée, pour la clarté des dessins.

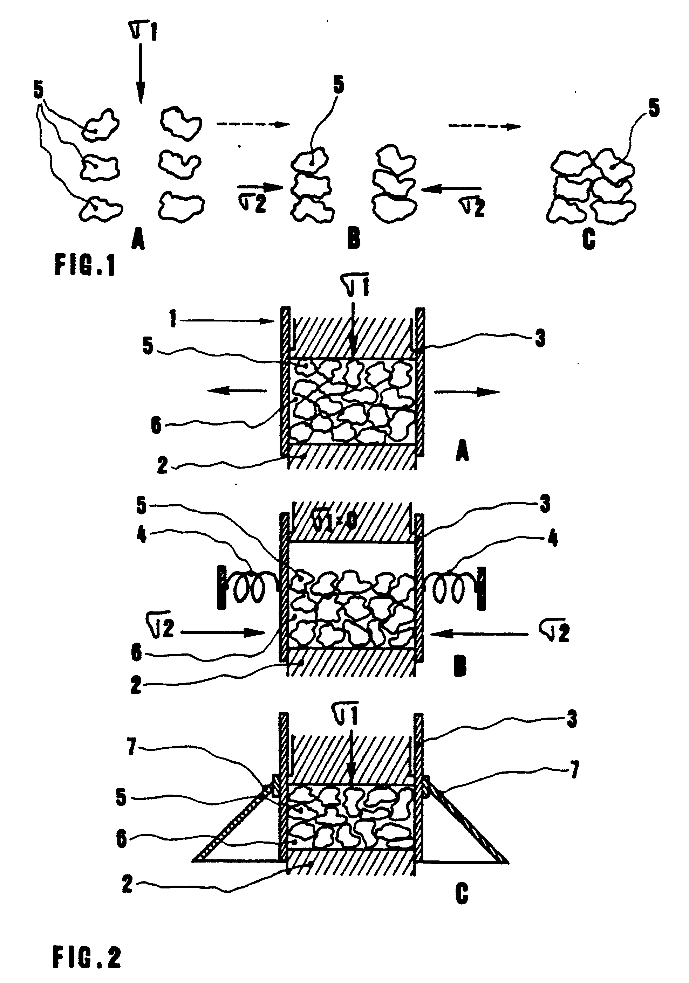

Selon l'invention, le bloc à compacter est disposé dans le moule d'une presse, par exemple un moule parallélépipédique (1) comportant un fond (2) fixe, deux parois latérales opposées rigides et fixes (non visibles sur la coupe de la figure 2) et les deux autres parois latérales (3) mobiles par rapport au bloc à compacter, sous l'effet de vérins ou ressorts (4). Pendant le chargement ces moyens élastiques (4) contrôlent et limitent l'écartement des parois mobiles et, après déchargement de la contrainte première σ1, ils exercent une contrainte de réaction qui tend à ramener les parois vers leur position d'origine. Ces mêmes moyens (4) exercent donc également les contraintes σ2 lorsque la contrainte σ1 est réduite ou supprimée.

Le réarrangement des grains de coke (5), enrobés du liant (6) est schématisé sur les figures 2A, 2B, 2C.

Dans un premier mode de réalisation, le compactage est biaxial et comporte une succession de contraintes premières σ1, puis secondes σ2 sur deux parois opposées (3) du moule (1).

La contrainte première σ1 peut être, par exemple, verticale, mais rien ne s'oppose à ce que le piston de la presse soit disposé horizontalement.

Dans un second mode de réalisation, le compactage est triaxial et comporte par exemple une succession de contraintes verticales puis latérales sur deux parois opposées, puis latérale sur les deux autres parois, puis à nouveau verticale, ou, en variante, verticale, latérale sur deux parois opposées, verticale, latérale sur les deux autres parois, à nouveau verticale et ainsi de suite. Là encore, le piston de la presse peut se déplacer selon une direction autre que verticale sans sortir du cadre de l'invention; il peut notamment être disposé horizontalement.

En pratique, la nature du matériau pressé et la complexité de l'appareil industriel capable de réaliser ces séquences seront les critères de choix entre l'un ou l'autre de ces modes de réalisation.

En outre, il est préférable de moduler, au cours des cycles successifs, l'amplitude des mouvements des parois latérales.

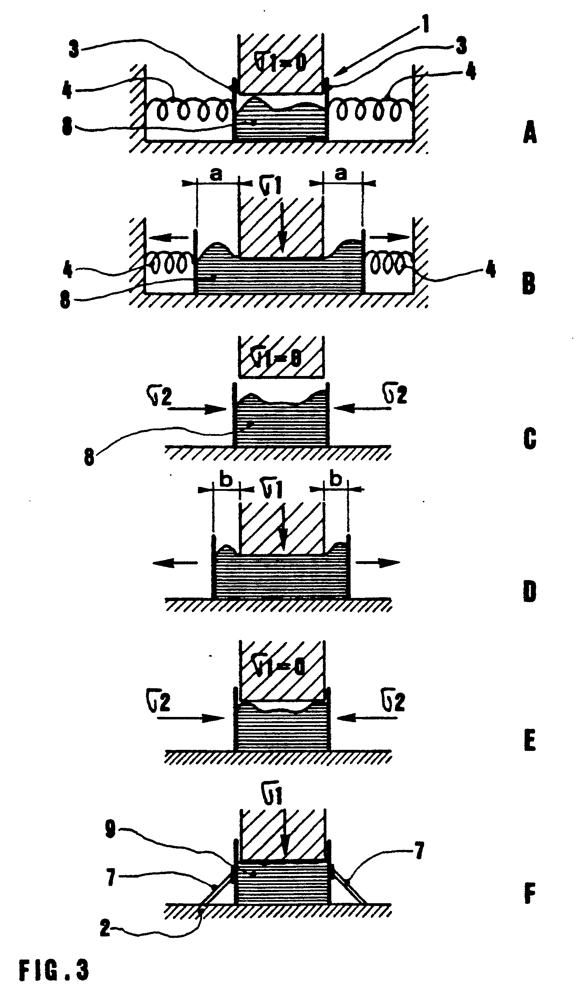

Au départ, le niveau de compactage de la pâte carbonée introduite dans le moule est faible : on peut donc régler la descente du piston et le déplacement des parois latérales avec une amplitude relativement grande (a) pour assurer un pétrissage efficace de l'ébauche (8) de bloc carboné (fig. 3A, 3B). Puis, progressivement, on diminue cette amplitude (b) (fig. 3C, 3D). Pour au moins le dernier cycle, les parois latérales doivent être complètement bloquées par un moyen amovible symbolisé par l'élément (7) fig. 3E, 3F), de façon à conférer au bloc carboné ses dimensions définitives précises (9).

Le moule, pour la mise en oeuvre du procédé de compactage, peut être réalisé selon diverses variantes qui ne sortent pas du cadre de l'invention. Par exemple, ce moule peut ne pas être parallélépipédique mais constitué d'un fond et de deux ou plusieurs secteurs, dans le cas de la mise en forme d'électrodes cylindriques. Dans le cas particulier de deux hémi-cylindres, la contrainte σ1 est exercée par le piston d'une presse, les deux hémicylindres constituent les deux parois mobiles qui s'écartent pendant l'application de σ1 et se rapprochent, sous l'effet de ressorts ou de vérins, pour exercer la contrainte σ2 après suppression partielle ou totale de 1.

De même, le fond du moule peut être fixe ou mobile : dans ce dernier cas, il peut être constitué par le second piston d'une presse, les axes de déplacement de ces pistons pouvant être aussi bien verticaux que horizontaux.

Enfin, dans le cas où l'on veut obtenir un niveau de compacité plus élevé, on peut procéder à cette opération sous une pression inférieure à la pression atmosphérique de façon qu'à chaque pétrissage, l'air et les gaz occlus soient extraits rapidement.

Compte tenu de la température habituelle du pressage des pâtes carbonées (120-140° C) et de la tension de vapeur des composants volatils du brai, la dépression sera choisie de façon à ne pas provoquer de distillation importante de ces composants : par exemple 100 Torrs (env. 13300 Pa)-(cette valeur étant donnée à titre indicatif).

## EXEMPLE DE MISE EN OEUVRE DE L'INVENTION

L'invention a été mise en oeuvre, en mode "biaxial" dans un moule oedométrique dilatable constitué d'un fond fixe, de deux parois latérales opposées fixes, et les deux autres parois latérales étant commandées par un système élastique (constitué de ressorts) à raideur connue, prédéterminée.

Le moule ayant reçu une charge de pâte carbonée classique (coke + brai) à 150°C, on a appliqué de façon cyclique une série de n contraintes verticales jusqu'à un niveau $\sigma 1$ (chargement), suivies d'un déchargement jusqu'à zéro. Lors du chargement, les deux parois s'écartent sous l'action de la contrainte latérale (de sens opposé à la contrainte opposée par les ressorts) proportionnelle à $\sigma 1$. Lors du déchargement, sous l'action des ressorts latéraux, les deux parois latérales tendent à se rapprocher, et exercent ainsi la contrainte transversale $\sigma 2$.

En pratique, on a réalisé selon l'invention des séries de 100 cycles, sous une contrainte $\sigma 1$ de 12 MPa, la contrainte $\sigma 2$ étant de l'ordre de 8 MPa.

Parallèlement, la même pâte carbonée a été compactée, à la même température, dans un moule oediométrique, selon l'art antérieur :
- d'une part, en pressage à un seul cycle sous 45 MPa,
- d'autre part, en pressage multicycles à 100 cycles sous 12 MPa.

On a constaté que les blocs obtenus selon l'invention avaient une densité sèche :
- supérieure de 0,08 $g/cm^3$ aux blocs obtenus sous 45 MPa/1 cycle
- supérieure de 0,06 $g/cm^3$ aux blocs obtenus sous 12 Mpa/100 cycles.

La densité sèche (DS) se définit par la relation :

DS = DA (100-% brai)/100

DA étant la densité apparente de la pâte carbonée crue, telle qu'on la mesure, et % brai étant la teneur en brai en pourcentage pondéral dans la pâte crue.

Le gain est très significatif et correspond à une amélioration sensible de la qualité des anodes.

## AVANTAGES PROCURES PAR L'INVENTION

Le compactage multiaxial permet de travailler avec des contraintes plus faibles (à qualité d'anode égale) qu'avec les procédés classiques, ce qui permet de produire des anodes de plus grandes dimensions avec une presse donnée, en changeant simplement le moule.

Le compactage multiaxial permet de réduire l'anisotropie des anodes pressées. En particulier, on constate que la résistivité des anodes cuites qui est habituellement supérieure dans le sens de pressage à celle qui est mesurée dans un sens perpendiculaire au sens du pressage, tend à s'égaliser selon les deux axes.

Enfin, le compactage multiaxial augmente la compacité de l'anode, donc sa durée de vie sur la cuve d'électrolyse, ce qui réduit la fréquence des opérations de changement d'anode dont on connaît le caractère perturbateur sur l'équilibre thermique de la cuve.

## Revendications

1. Procédé de mise en forme par compactage dans un moule de blocs constitués d'une pâte carbonée à base d'un agrégat carboné tel que coke, anthracite, graphite, d'un liant organique cokéfiable tel que le brai et d'additifs éventuels comportant l'application répétitive sur ladite pâte par les parois mobiles du moule de contraintes orientées dans diverses directions, caractérisé en ce que ces contraintes sont exercées successivement et de telle sorte que, pendant l'application d'une contrainte $\sigma n$ selon un axe An, on contrôle et on limite l'écartement des parois mobiles par des moyens élastiques qui, après suppression au moins partielle de cette contrainte $\sigma n$, exercent à leur tour une contrainte $\sigma n + 1$ de réaction selon un axe An + 1 qui tend à ramener les parois mobiles vers leur position d'origine.

2. Procédé selon revendication 1, caractérisé en ce que les contraintes sont exercées selon deux axes An et An + 1 perpendiculaires entre eux.

3. Procédé selon revendication 1, caractérisé en ce que les axes An, An + 1 et An + 2 forment un trièdre trirectangle.

4. Procédé selon revendications 1, 2 ou 3, caractérisé en ce que le déplacement des parois s'effectue dans une direction sensiblement perpendiculaire à l'axe de la contrainte.

5. Procédé selon revendication 1, caractérisé en ce que l'amplitude de chaque déplacement relatif des parois est progressivement réduite à mesure que le compactage progresse.

6. Procédé selon revendication 1, caractérisé en ce que au moins une partie des contraintes $\sigma$-(n) est exercée par le piston d'une presse.

7. Procédé selon revendication 1, caractérisé en ce que au moins une partie des contraintes $\sigma$-(n) est exercée par réaction élastique de certaines des parois du moule.

8. Procédé selon l'une quelconque des revendications 1 à 7, caractérisé en ce qu'il est mis en oeuvre sous une pression inférieure à la pression atmosphérique.

9. Dispositif pour la mise en oeuvre du procédé de compactage de blocs carbonés selon l'une des revendications 1 à 8 comportant un moule (1) dont les parois mobiles (3) orientées selon des axes différents sont soumises de façon répétitive à des contraintes, caractérisé en ce que ledit moule est constitué par un fond (2) indéformable et par au moins deux parois mobiles (3) munies de moyens élastiques (4) qui contrôlent et limitent l'écartement des parois mobiles pendant l'application d'une contrainte au bloc à compacter en exerçant à leur tour une contrainte de réaction qui tend à ramener ces parois mobiles vers leur position initiale quand la contrainte précédente est réduite ou supprimée.

10. Dispositif selon revendication 9, caractérisé en ce que le fond du moule est fixe.

11. Dispositif selon revendication 9, caractérisé en ce que le fond du moule est constitué par l'extrémité du piston d'une presse.

12. Dispositif selon revendication 11, caractérisé en ce que les moyens élastiques (4) sont constitués par des ressorts de raideur prédéterminée.

13. Dispositif selon revendication 11, caractérisé en ce que les moyens élastiques (4) sont des vérins hydrauliques.

14. Dispositif selon revendication 9, caractérisé en ce que les parois mobiles (3) sont munies de moyens amovibles de blocage (7) dans une position prédéterminée.

**Claims**

1. A process for shaping by compacting in a mould blocks formed by a carbonaceous paste based on a carbonaceous aggregate such as anthracite or graphite, an organic cokable binder such as tar and optional additives comprising the repetitive application to said paste by the movable walls of the mould of stresses which are oriented in different directions, characterised in that said stresses are exercised successively and in such a way that, during the application of a stress $\sigma n$ along an axis An, the spacing of the movable walls is controlled and limited by resilient means which, after at least partial suppression of said stress $\sigma n$, in turn exercise a reaction stress $\sigma n + 1$ along an axis An + 1 which tends to return the movable walls towards their position of origin.

2. A process according to claim 1 characterised in that the stresses are exercised along two axis An and An + 1 which are perpendicular to each other.

3. A process according to claim 1 characterised in that the axes An, An + 1 and An + 2 form a trirectangular trihedron.

4. A process according to claim 1, claim 2 or claim 3 characterised in that the displacement of the walls is in a direction substantially perpendicular to the axis of the stress.

5. A process according to claim 1 characterised in that the amplitude of each relative displacement of the walls is progressively reduced as the compacting operation progresses.

6. A process according to claim 1 characterised in that at least a part of the stresses $\sigma(n)$ is applied by the piston of a press.

7. A process according to claim 1 characterised in that at least a part of the stresses $\sigma(n)$ is applied by resilient reaction of some of the walls of the mould.

8. A process according to one of claims 1 to 7 characterised in that it is carried out under a pressure lower than atmospheric pressure.

9. Apparatus for carrying out the carbonaceous block compacting process according to one of claims 1 to 8 comprising a mould (1) in which the movable walls (3) which are oriented along different axes are repetitively subjected to stresses characterised in that said mould is formed by a non-deformable bottom (2) and by at least two movable walls (3) provided with resilient means (4) which control and limit the spacing of the movable walls during the application of a stress to the block to be compacted while in turn exercising a reaction stress which tends to return said movable walls towards their initial position when the preceding stress is reduced or suppressed.

10. Apparatus according to claim 9 characterised in that the bottom of the mould is fixed.

11. Apparatus according to claim 9 characterised in that the bottom of the mould is formed by the end of the piston of a press.

**12.** Apparatus according to claim 11 characterised in that the resilient means (4) are formed by springs of predetermined stiffness.

**13.** Apparatus according to claim 11 characterised in that the resilient means (4) are hydraulic jacks.

**14.** Apparatus according to claim 9 characterised in that the movable walls (3) are provided with removable means (7) for blocking them in a predetermined position.

**Patentansprüche**

**1.** Verfahren zur Formgebung von Blöcken, die aus einer kohlenstoffhaltigen Paste auf Basis einer Kohlenstoffmasse, wie z.B. Koks, Anthrazit, Graphit, sowie eines verkokbaren organischen Bindemittels, wie z.B. Pech, mit eventuellen Zusätzen bestehen, durch Kompaktierung in einer Form, das die wiederholte Einwirkung von in verschiedenen Richtungen ausgerichteten Drücken auf die Paste durch die beweglichen Wände der Form vorsieht,
**dadurch gekennzeichnet,**
daß diese Drücke nacheinander derart ausgeübt werden, daß man während der Einwirkung eines Druckes $\sigma n$ längs einer Achse An den Abstand der beweglichen Wände durch elastische Mittel steuert und begrenzt, die nach wenigstens teilweiser Aufhebung dieses Druckes $\sigma n$ ihrerseits eine Reaktionskraft $\sigma n+1$ längs einer Achse An+1 ausüben, die dazu neigt, die beweglichen Wände in ihre Ausgangslage zurückzuführen.

**2.** Verfahren nach Anspruch 1,
**dadurch gekennzeichnet,**
daß die Drücke längs zweier zueinander senkrechter Achsen An und An+1 ausgeübt werden.

**3.** Verfahren nach Anspruch 1,
**dadurch gekennzeichnet,**
daß die Achsen An, An+1 und An+2 einen dreirechtwinkligen Trieder bilden.

**4.** Verfahren nach den Ansprüchen 1, 2 oder 3,
**dadurch gekennzeichnet,**
daß die Verschiebung der Wände in einer zur Achse des Druckes im wesentlichen senkrechten Richtung erfolgt.

**5.** Verfahren nach Anspruch 1,
**dadurch gekennzeichnet,**
daß die Amplitude jeder Relativverschiebung der Wände fortlaufend im Maße des Fortschritts der Kompaktierung verringert wird.

**6.** Verfahren nach Anspruch 1,
**dadurch gekennzeichnet,**
daß wenigstens ein Teil der Drücke $\sigma(n)$ durch den Stempel einer Presse ausgeübt wird.

**7.** Verfahren nach Anspruch 1,
**dadurch gekennzeichnet,**
daß wenigstens ein Teil der Drücke $\sigma(n)$ durch elastische Reaktion einiger der Wände der Form ausgeübt wird.

**8.** Verfahren nach irgendeinem der Ansprüche 1 bis 7,
**dadurch gekennzeichnet,**
daß es bei einem Druck unterhalb des Atmosphärendrucks durchgeführt wird.

**9.** Vorrichtung zur Durchführung des Verfahrens zur Kompaktierung von Kohlenstoffblöcken nach einem der Ansprüche 1 bis 8, die eine Form (1) aufweist, deren längs verschiedener Achsen ausgerichteten beweglichen Wände (3) in wiederholter Weise Drücken ausgesetzt werden,
**dadurch gekennzeichnet,**
daß die Form aus einem unverformbaren Boden (2) und aus wenigstens zwei beweglichen Wänden (3) besteht, die mit elastischen Mitteln (4) versehen sind, die den Abstand der beweglichen Wände während der Einwirkung eines Druckes auf den zu kompaktierenden Block steuern und begrenzen, indem sie ihrerseits eine Reaktionskraft ausüben, die dazu neigt, diese beweglichen Wände in ihre Ausgangslage zurückzuführen, wenn der vorherige Druck verringert oder aufgehoben ist.

**10.** Vorrichtung nach Anspruch 9,
**dadurch gekennzeichnet,**
daß der Boden der Form feststehend ist.

**11.** Vorrichtung nach Anspruch 9,
**dadurch gekennzeichnet,**
daß der Boden der Form aus dem Ende des Stempels einer Presse besteht.

**12.** Vorrichtung nach Anspruch 11,
**dadurch gekennzeichnet,**
daß die elastischen Mittel (4) aus Federn vorbestimmter Federhärte bestehen.

**13.** Vorrichtung nach Anspruch 11,
**dadurch gekennzeichnet,**

daß die elastischen Mittel (4) hydraulische Winden sind.

14. Vorrichtung nach Anspruch 9,
dadurch gekennzeichnet,
daß die beweglichen Wände (3) mit lösbaren Mitteln zur Blockierung (7) in einer vorbestimmten Lage versehen sind.

FIG.1

FIG.2

FIG.3